# EUROPÄISCHE PATENTSCHRIFT

(11) **EP 1 992 858 B1**
(45) Veröffentlichungstag und Bekanntmachung des Hinweises auf die Patenterteilung: **21.10.2009**
(21) Anmeldenummer: 08012975.2
(22) Anmeldetag: 17.08.2000
(51) Int. Cl.: F16L 25/00

(54) **Befestigungskupplung für Wellrohre**
Mounting coupling for corrugated pipes
Couplage de fixation pour tuyaux ondulés

(30) Priorität: 21.08.1999 DE 29914435 U; 21.08.1999 DE 19939149; 24.09.1999 DE 29916743 U; 24.09.1999 DE 19945751
(43) Veröffentlichungstag der Anmeldung: 19.11.2008
(62) Teilanmeldung aus: 00958465.7
(73) Patentinhaber: Flexa GmbH & Co. KG, 63456 Hanau/Main (DE)
(72) Erfinder: Fieber, Dieter, 63512 Hainburg (DE)
(74) Vertreter: Wagner, Carsten

(56) Entgegenhaltungen:
- WO-A-98/40656
- US-A- 5 087 084
- US-A- 5 354 106

## Beschreibung

Die Erfindung betrifft Befestigungskupplungen für Wellrohre.

Seit vielen Jahren sind verschiedenartige Typen an Befestigungskupplungen für Wellrohre bekannt, siehe z.B. Dokument WO 98/40656. Eine Vielzahl weisen gefederte Riegel mit elastischen Fingern auf, die mit Vorsprüngen versehen sind, welche in ein Wellental eines Wellrohres eingreifen, um eine Fixierung des Rohres zu bewerkstelligen. Die Finger solcher Kupplungen erleiden beim Einschieben und beim Entfernen des Rohres eine elastische Auslenkung.

In DE 39 03 353 A1 ist eine Anschlußarmatur für umfangsgerippte Rohre oder Schläuche, insbesondere für flexible Wellschläuche, offenbart, mit quer zur Schlauchachse am Umfang umlaufenden Wellen oder dergleichen, wobei die Anschlußarmatur eine das Ende des Wellschlauches in sich aufnehmende Hülse hat und in der Wandung dieser Hülse eine gegen eine Rückstellkraft eines Federbereiches auslenkbare, sich in axialer Richtung der Hülse erstreckenden Zunge mit einem in das Hülseninnere gerichteten Vorsprung zum Eingriff in ein Wellental oder dergleichen des Wellschlauches oder Wellrohres für dessen axiale Festlegung vorgesehen ist, wobei die Anschlußarmatur dadurch gekennzeichnet ist, daß nur eine einzige Zunge vorgesehen ist, deren den Vorsprung aufweisender Bereich in Umfangsrichtung eine große Abmessung hat, und daß die Länge des Vorsprunges in Umfangsrichtung der Hülse wenigstens etwa gleich dem Innenradius der Hülse ist.

In DE 296 13 054 U1 ist ein Rohrverbinder aus Kunststoff offenbart, bestehend aus einem zur Aufnahme eines starren oder biegsamen Rohres (Schlauches) ausgebildeten hülsenförmigen Körper, dessen Mantel wenigstens eine eingeformte Zunge enthält, die durch eine etwa U-förmige Ausnehmung gebildet und um ihre Wurzel federnd bewegbar ist, sowie an ihrem freien Ende ein Sperrglied zum Eingreifen in eine Ausnehmung oder zum Hintergreifen eines Steges eines eingeschobenen Rohres ausgebildet ist, und die Zunge und das Sperrglied im rechten Winkel zur Hülsenachse gerichtet sind.

In EP 0414500 B1 ist eine Kupplung offenbart, bei der ein Fußabschnitt eines Fingers mit dem rohrförmigen Körper der Kupplung über seitliche Lagerelemente verbunden ist, die dafür sorgen, daß der Finger aufgrund elastischer Drehbeanspruchung der Elemente um eine Querachse nachgiebig verschwenkbar ist.

Nachteilig bei all diesen Kupplungen ist die Tatsache, daß die Riegel bzw. Finger entweder zu schwach sind, um die gewellte Leitung entgegen einer starken Auszieh-Kraft in Position zu halten, oder daß sie stark genug sind, die gewellte Leitung zu halten, statt dessen aber die Finger zu steif sind, um der Leitung zu ermöglichen, leicht in den Verbinder eingedrückt zu werden. Darüber hinaus ist es bei der letztgenannten Kupplung nachteilig, daß die Möglichkeit besteht, ohne Werkzeug eine nicht vorgesehene Freigabe des Wellrohres durch versehentliches bzw. bewußt mißbräuchliches Verschwenken eines entsprechenden Fingers zu ermöglichen. Dies ist insbesondere in sicherheitsrelevanten Bereichen ausgesprochen nachteilig.

Aus dem vorgenannten ergibt sich das Problem, mit Hilfe von neuartigen Befestigungskupplungen für Wellrohre die obengenannten Nachteile zumindest teilweise zu beseitigen. Das sich ergebende Problem besteht insbesondere darin, Befestigungskupplungen für Wellrohre bereitzustellen, die eine - insbesondere nur mit Hilfe eines Werkzeuges - auf einfache Art und Weise mögliche Freigabe eines vorher fixierten Wellrohres ermöglichen und ein unbeabsichtigtes Herausrutschen des Wellrohres verhindert wird.

Dieses Problem wird erfindungsgemäß durch Befestigungskupplungen nach Anspruch 1 gelöst.

Die Befestigungskupplung weist eine rohrförmige Hülse mit einem offenen Einführungsende zum Aufnehmen des Wellrohres auf, wobei die Hülse mindestens einen Sperrvorsprung für den Eingriff in eine Umfangsrille des Wellrohres trägt. Erfindungswesentlich ist die Tatsache, daß der Sperrvorsprung in einem aus der Umfangswand der rohrförmigen Hülse mittels eines Filmscharniers radial herausklappbaren Hülsenabschnitt angeordnet ist. Mittels des Filmscharniers ist eine einfache und bei entsprechender Ausgestaltung des Hülsenabschnittes und des das offene Ende des Hülsenabschnittes aufnehmenden Teils des rohrförmigen Körpers der Befestigungskupplung nur mit Hilfe eines Werkzeugs einfache Öffnung möglich. Der Sperrvorsprung des Hülsenabschnittes wird dadurch in eine Freigabestellung außer Eingriff mit der Rille des Wellrohres gebracht.

Weiterhin ist es erfindungswesentlich, daß die Befestigungskupplung mindestens eine in einer Ausnehmung in der Umfangswand der Hülse beweglich angeordnete, dem Sperrvorsprung gegenüberliegende Sicherungszunge aufweist, wobei die Sicherungszunge bezüglich der Hülse über mindestens ein nicht als Filmscharnier ausgestaltetes Befestigungselement angebunden ist. Auf diese Art und Weise wird beim Öffnen des Hülsenabschnittes ein versehentliches Herausrutschen des Wellrohres nahezu vermieden, da zumindest die Sicherungszunge in eine Umfangsrille des Wellrohres greift. Bei Ausgestaltung der Anbindung der Sicherungszunge als Filmscharnier wäre eine Freigabe eines Wellrohres nur über eine Entriegelung mittels eines Hilfswerkzeugs möglich, wobei bei vorheriger Entriegelung ein unbeabsichtigtes Herausrutschen bei Lösen des (ersten) Filmscharniers möglich wäre. Um dies zu vermeiden darf die zweite Anbindung der zweiten Sicherungszunge nicht als Filmscharnier ausgestaltet sein.

Es sei darauf hingewiesen, daß der Hülsenabschnitt einen Teil des offenen Einführungsendes bilden kann.

Schließlich weist die rohrförmige Hülse am offenen Einführungsende zumindest im Bereich des Hülsenabschnittes einen Stützring auf, da ein Wellrohr in der Befestigungskupplung fixiert und die Stabilität der über das Filmscharnier stattfindenden Anbindung des Hülsenabschnittes an die Hülse erhöht wird.

Weiterhin ist der Stützring ovalförmig, da eine sehr gute Fixierung eines Wellrohres möglich ist und darüber hinaus das Lösen des Wellrohres - bei geöffnetem Hülsenabschnitt - nur mit Hilfe eines Werkzeuges bei radialer Verschiebung der zweiten Sicherungszunge in eine Freigabestellung außer Eingriff mit einer Rille des Wellrohres möglich ist. Ein unbeabsichtigtes Herausfallen des Wellrohres ist somit quasi ausgeschlossen.

Bei dieser Ausgestaltung kann durch leichtes Hin-und Herbewegen des vorher fixierten Schlauchs und/oder durch leichtes radiales Deformieren der Hülse das Wellrohr freigegeben und folglich aus der Befestigungskupplung herausgezogen werden. Dies stellt - nach Öffnung des Hülsenabschnittes - eine besonders leichte Möglichkeit dar, das Wellrohr von der Befestigungskupplung zu trennen.

Die zweite Sicherungszunge weist einen über das Befestigungselement in axialer Richtung über das offene Einführungsende herausragenden Hebelarm auf da auf diese Art und Weise durch radiales Verschwenken des über dem offenen Einführungsende der Hülse sich befindenden Teils des Befestigungselementes zur Hülsenachse hin und damit eine relativ bequeme Freigabe des gesicherten Wellrohres - bei geöffnetem Filmscharnier - durch radiales Verschwenken der zweiten Sicherungszunge in eine Freigabestellung außer Eingriff möglich ist.

Bei der Befestigungskupplung ist es vorteilhaft, wenn die Sicherungszunge in vom Sperrvorsprung wegweisender Richtung konisch-verjüngend ausgebildet ist, da somit eine höhere Verschwenkbarkeit und folglich eine leichtere Demontage möglich ist.

Bei der Befestigungskupplung weist die Hülse vorteilhaft eine schlitzförmige, als Hohlprofil ausgebildete Ausnehmung zur Aufnahme des Hülsenabschnitts auf, da es sich bei dieser Ausgestaltung um eine relativ einfach zu realisierende und kostengünstige Möglichkeit einer Arretierbarkeit des Hülsenabschnitts in der Hülse handelt.

In diesem Zusammenhang ist es schließlich von Vorteil, wenn die schlitzförmige Ausnehmung eine einen ersten Vorsprung im Hohlprofil der Ausnehmung bildende Auflauffläche aufweist und das freie Ende des Hülsenabschnitts eine korrespondierende Auflauffläche mit einem zweiten Vorsprung zum Hintergreifen des ersten Vorsprungs beim Einrasten des Hülsenabschnitts in der Hülle aufweist.

Es sei darauf hingewiesen, daß der Stützring auch kreisförmig ausgestaltet sein kann.
Nachfolgend wird ein Ausführungsbeispiel der Erfindung anhand mehrerer Zeichnungen erläutert. In den Zeichnungen zeigen:
- Figur 1 -: eine perspektivische Darstellung einer Ausgestaltung der erfindungsgemäßen Befestigungskupplung;
- Figur 2 -: eine Queransicht der in Figur 1 dargestellten Befestigungskupplung mit geschlossenem Hülsenabschnitt.

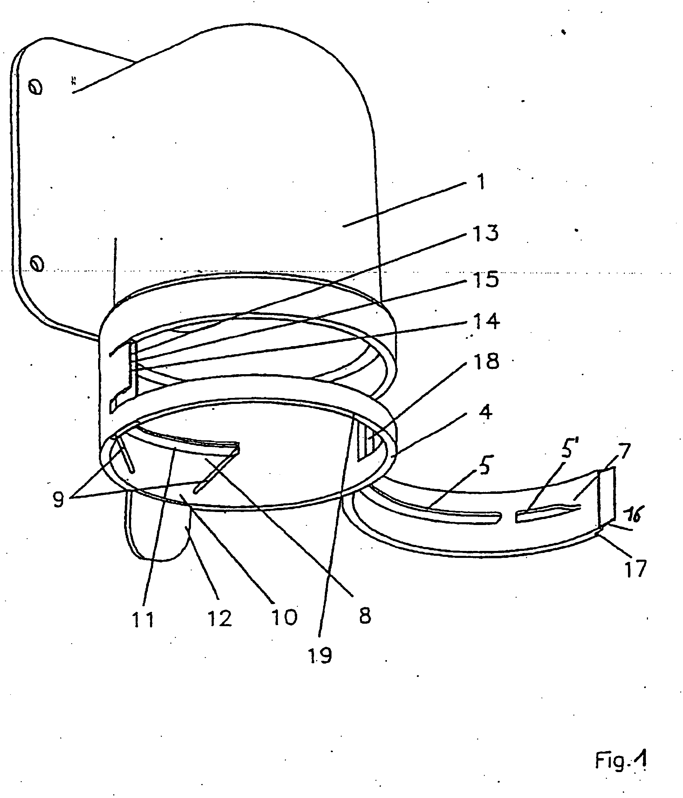

Figur 1 zeigt eine perspektivische Darstellung einer Ausgestaltung der erfindungsgemäßen Befestigungskupplung in Form eines anflanschbaren Kupplungswinkels.

Die Befestigungskupplung weist eine winkel- und rohrförmige Hülse 1 auf, die ein offenes Einführungsende zum Aufnehmen eines Wellrohres besitzt. Darüber hinaus sind drei (einer ist nicht zu erkennen) Sperrvorsprünge 5, 5' vorhanden, die - bei geschlossenem Zustand eines Hülsenabschnittes 7 - in der Umfangswand 4 der Hülse 1 starr angeordnet ist. Der Hülsenabschnitt 7 ist über ein Filmscharnier 18 an die Hülse 1 angelenkt. Die Sperrvorsprünge 5, 5' sind in einem aus der Umfangswand 4 der rohrförmigen Hülse 1 mittels eines Filmscharniers 18 radial herausklappbaren Hülsenabschnitt 7 angeordnet. Darüber hinaus weist die Befestigungskupplung eine in einer Ausnehmung 9 in der Umfangswand 4 der Hülse 1 beweglich angeordnete, den Sperrvorsprüngen 5, 5' gegenüberliegende Sicherungszunge 8 auf, wobei die Sicherungszunge 8 bezüglich der Hülse 1 über ein Befestigungselement 10, hier in Form eines Materialsteges, angebunden ist. Die rohrförmige Hülse 1 weist am offenen Einführungsende einen kreisförmigen Stützring 19 auf.

Die Freigabestellung des Sperrvorsprungs 11 wird dadurch erleichtert, daß die Sicherungszunge 8 einen über das Befestigungselement 10 in axialer Richtung über das offene Einführungsende herausragenden Hebelarm 12 aufweist.

Weiterhin weist die Hülse 1 eine schlitzförmige, als Hohlprofil ausgebildete Ausnehmung 13 zur Aufnahme des Hülsenabschnittes 7 auf.

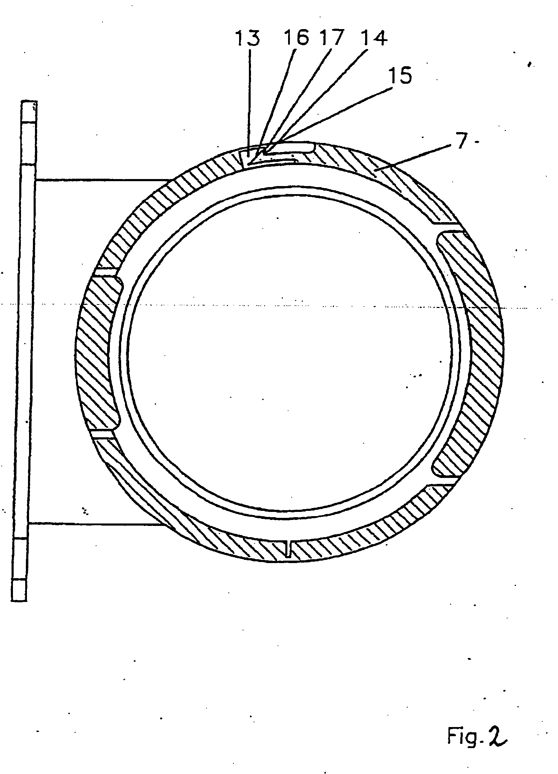

Dies und die in der nachfolgenden Beschreibung der erfindungsgemäßen ersten Befestigungskupplung weiteren Merkmale sind in der Figur 2 gut zu erkennen.

Die schlitzförmige Ausnehmung 13 weist eine einen ersten Vorsprung 14 im Hohlprofil der Ausnehmung 13 bildende Auflauffläche 15 und das freie Ende des Hülsenabschnitts 7 eine korrespondierende Auflauffläche 16 mit einem zweiten Vorsprung 17 zum Hintergreifen des ersten Vorsprungs 14 beim Einrasten des Hülsenabschnitts 7 in der Hülse 1 auf.

Schließlich ist in Figur 2 zu erkennen, daß im geschlossenen Zustand des Hülsenabschnitts 7 der zweite Vorsprung 17 den ersten Vorsprung 14 hintergreift und somit eine Arretierung bewerkstelligt. Diese Arretierung kann nur noch mit einem Stift gelöst werden, indem dieser in die Ausnehmung 13 derart eingeführt wird, daß eine Relativbewegung der beiden Vorsprünge 14, 17 sich voneinander entfernend stattfindet und gleichzeitig der Hülsenabschnitt 7 radial aus der Umfangswand 4 der rohrförmigen Hülse 1 herausgeklappt wird. In dieser Stellung wird das entsprechende Wellrohr nur noch von dem Sperrvorsprung 11 der zweiten Sicherungszunge 8 gehalten. Durch Betätigen des Hebelarms 12 wird das Wellrohr endgültig freigegeben.

## Patentansprüche

1. Befestigungskupplung für Wellrohre, mit einer rohrförmigen Hülse (1), die ein offenes Einführungsende zum Aufnehmen des Wellrohres aufweist, und
- mindestens einen Sperrvorsprung (5,5') für den Eingriff in eine Umfangsrille des Wellrohres trägt, **dadurch gekennzeichnet, daß**
- der Sperrvorsprung (5,5') in einem aus der Umfangswand (4) der rohrförmigen Hülse (1) mittels eines Filmscharniers (18) radial herausklappbaren Hülsenabschnitt (7) angeordnet ist, und
- die Befestigungskupplung mindestens eine in einer Ausnehmung (9) in der Umfangswand (4) der Hülse (1) beweglich angeordnete, dem Sperrvorsprung (5,5') gegenüberliegende Sicherungszunge (8) aufweist, wobei die Sicherungszunge (8) bezüglich der Hülse (1) über mindestens ein nicht als Filmscharnier ausgestaltetes Befestigungselement (10) angebunden ist, wobei die rohrförmige Hülse (1) am offenen Einführungsende zumindest im Bereich des Hülsenabschnitts (7) einen ovalen Stützring (19) und die zweite Sicherungszunge (8) einen über das Befestigungselement (10) in axialer Richtung über das offene Einführungsende herausragenden Hebelarm (12) aufweist.

2. Befestigungskupplung nach Anspruch 1, **dadurch gekennzeichnet, daß** die Sicherungszunge (8) in vom Sperrvorsprung (11) wegweisenden Richtung konisch-verjüngend ausgebildet ist.

3. Befestigungskupplung nach einem der Ansprüche 1 bis 2, **dadurch gekennzeichnet, daß** die Hülse (1) eine schlitzförmige, als Hohlprofil ausgebildete Ausnehmung (13) zur Aufnahme des Hülsenabschnitts (7) aufweist.

4. Befestigungskupplung nach Anspruch 3, **dadurch gekennzeichnet, daß** die schlitzförmige Ausnehmung (13) eine einen ersten Vorsprung (14) im Hohlprofil der Ausnehmung (13) bildende Auflauffläche (15) aufweist und das freie Ende des Hülsenabschnitts (7) eine korrespondierende Auflauffläche (16) mit einem zweiten Vorsprung (17) zum Hintergreifen des ersten Vorsprungs (14) beim Einrasten des Hülsenabschnitts (7) in der Hülse (1) aufweist.

## Claims

1. An attachment coupling for corrugated pipes having a tubular sleeve (1) which comprises an open insertion end for mounting the corrugated pipe and supports
- at least one locking projection (5, 5') for engaging in a circumferential channel of the corrugated pipe, **characterised in that**
- the locking projection (5, 5') is arranged in a sleeve section (7) that can be folded radially out of the circumferential wall (4) of the tubular sleeve (1) by means of a film hinge (18), and
- the attachment coupling comprises at least one locking tongue (8) arranged moveably in a recess (9) in the circumferential wall (4) of the sleeve (1) and opposite the locking projection (5, 5'), whereby the locking tongue (8) is joined in relation to the sleeve (1) via at least one attachment element (10) that is not in the form of a film hinge, whereby the tubular sleeve (1) on the open insertion end comprises at least in the region of the sleeve section (7) an oval support ring (19) and the second locking tongue (8) comprises a lever arm (12) projecting out over the attachment element (10) in axial direction over the open insertion end.

2. The attachment coupling according to claim 1, **characterised in that** the locking tongue (8) is designed to taper conically in a direction pointing away from the locking projection (11).

3. The attachment coupling according to either or claims 1 to 2, **characterised in that** the sleeve (1) comprises a slit-like recess (13) in the form of a hollow profile for mounting the sleeve section (7).

4. The attachment coupling according to claim 3, **characterised in that** the slit-like recess (13) has a leading surface (15) forming a first projection (14) in the hollow profile of the recess (13) and the free end of the sleeve section (7) has a corresponding leading surface (16) with a second projection (17) for gripping behind the first projection (14) when the sleeve section (7) connects with the sleeve (1).

## Revendications

1. Accouplement de fixation pour tube ondulé avec un manchon tubulaire (1) qui présente une extrémité d'admission ouverte pour recevoir le tube ondulé et
- qui porte au moins une saillie de blocage (5, 5') pour pénétrer dans une rainure périphérique du tube ondulé, **caractérisé en ce que**
- la saillie de blocage (5, 5') est disposée dans une section du manchon (7) pouvant être radialement pivotée vers l'extérieur de la paroi périphérique (4) du manchon tubulaire (1) au moyen d'une film (18) charnière et
- que l'accouplement de fixation présente au moins une languette de sécurité (8) disposée mobile dans un évidemment (9) de la paroi périphérique (4) du manchon (1) en face de la saillie de blocage (5, 5'), la languette de sécurité (8) étant reliée par rapport au manchon (1) par au moins un élément de fixation (10) non constitué d'un film charnière, le manchon tubulaire (1) présentant, à son extrémité d'admission ouverte, au moins dans la zone de la section de manchon (7), un anneau d'appui ovale (19) et la seconde languette de sécurité (8) un bras de levier (12) dépassant, en direction axiale, de l'extrémité d'admission ouverte, au-delà de l'élément de fixation (10).

2. Accouplement de fixation selon la revendication 1, **caractérisé en ce que** la languette de sécurité (8) va en se rétrécissant coniquement dans la direction opposée à la saillie de blocage (11).

3. Accouplement de fixation selon l'une des revendications 1 et 2, **caractérisé en ce que** le manchon (1) présente un évidemment (13) en forme de fente formée par un profil creux pour recevoir la section de manchon (7).

4. Accouplement de fixation selon la revendication 3, **caractérisé en ce que** l'évidemment (13) en forme de fente présente une surface de inclinée (15) formant une première saillie (14) dans le profil creux de l'évidemment (13) et que l'extrémité libre de la section de manchon (7) présente une surface inclinée (16) correspondante avec une seconde saillie (17) pour accrocher par derrière la première saillie (14) lors de la mise en place de la section de manchon (7) dans le manchon (1).
